# EUROPEAN PATENT SPECIFICATION

(11) **EP 2 818 274 B1**
(45) Date of publication and mention of the grant of the patent: **31.05.2017**
(21) Application number: 13174170.4
(22) Date of filing: 27.06.2013
(51) Int. Cl.: B23P 15/00, B25B 13/06, G09F 7/00, B25B 13/56, G09F 3/00

(54) **Method for marking a tool**
Verfahren zum Markieren eines Werkzeugs
Procédé de marquage d'un outil

(43) Date of publication of application: 31.12.2014
(73) Proprietor: Pard Hardware Industrial Co., Ltd., Taichung City 407 (TW)
(72) Inventor: Lin, Jian Liang, 407 Taichung (TW)
(74) Representative: Lang, Christian

(56) References cited:
- DE-A1- 10 319 719
- TW-A- 201 102 228
- US-A1- 2004 144 214
- US-A1- 2008 257 741
- US-A1- 2009 288 522
- US-A1- 2010 095 813
- US-A1- 2010 180 659
- US-A1- 2013 042 726

## Description

### BACKGROUND OF INVENTION

### 1. FIELD OF INVENTION

The present invention relates to tools and, more particularly, to a method for marking tools.

### 2. RELATED PRIOR ART

People drive threaded bolts and nuts of various shapes and sizes with tools such as open-ended wrenches, box-ended wrenches, monkey wrenches, socket wrenches or screwdrivers. A toolkit may include a handle and a set of sockets and/or screwdriver bits of various shapes and sizes. In operation, the handle is connected to a selected one of the sockets and/or screwdriver bits for driving a threaded bolt or nut of a certain shape and size. Thus, a toolkit can be used to drive threaded bolts and nuts of various shapes and sizes. It is important to mark the tools to indicate their sizes and/or carry trademarks, logos and/or patterns.

A mark can be provided on a tool by relief or provided in a tool by intaglio before the tool is electroplated. The mark and the background are substantially of a same color. The mark is not clearly visible amid the background as they are in weak contrast to each other.

Alternatively, a tool can be electroplated before it is printed with a mark. The mark is clearly visible amid the background since they are in strong contrast to each other. However, the mark could easily be removed from the tool because of hits, abrasion or scratches. Hence, the clear visibility of the mark amid the background is not durable.

Alternatively, a ring can be attached to a tool. The ring is made of a color to represent a specific size of the tool. The ring is made of rubber or plastic. Hence, the rings could easily be broken or detached from the sockets. Alternatively, the ring could easily be blurred because of oil, grease and/or dirt.

Therefore, the present invention is intended to obviate or at least alleviate the problems encountered in prior art.

US 2004/0144214 A1 discloses sockets and method of surface treatment for sockets wherein a specification is rolled in an outer surface of the socket, and a colored layer is provided where the specification is. Then, a differently colored layer is provided on the socket except for the specification. Finally, a protection layer is coated on the outer surface of the socket including the specification.

US 2010/0095813 A1 discloses a socket with a marking unit to mark the size, trademark or manufactory of the socket. An indented mark is made in the external side of the socket. A color layer is provided on the external side of the socket such as to cover the indented mark and an adjacent region of the external side. The portion of the color layer beyond the indented mark is removed. Then, a coating is provided on the colored mark and the external side of the socket.

DE 103 19 719 A1 discloses a method of manufacturing a tool including different steps of surface treatment.

US 2008/0257741 A1 discloses a metal hand tool and the method for manufacturing the same, which method includes a forming step, a printing step and an electroplate step.

### SUMMARY OF INVENTION

It is the primary objective of the present invention to provide a method for marking a tool.

To achieve the foregoing objective, the method includes the the features of claim 1.

Preferred embodiments are presented in the dependent claims. Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a flow chart of a method for marking a tool according to the first embodiment of the present invention;
FIGS. 2 to 7 are perspective views of a bit of a screwdriver at several steps of the method shown in FIG. 1;
FIGS. 8 to 12 are perspective views of a socket of a wrench at several steps of the method shown in FIG. 1; and
FIG. 13 is a flow chart of a method for marking a tool according to the second embodiment of the present invention.

### DETAILED DESCRIPTION OF EMBODIMENTS

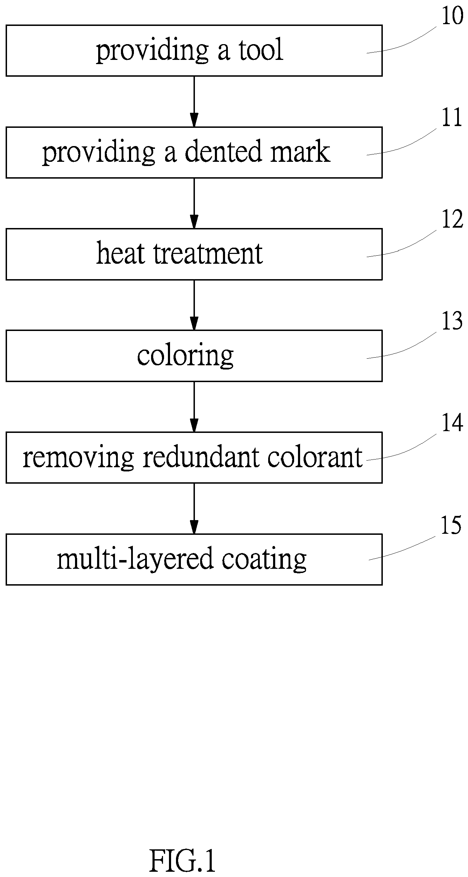

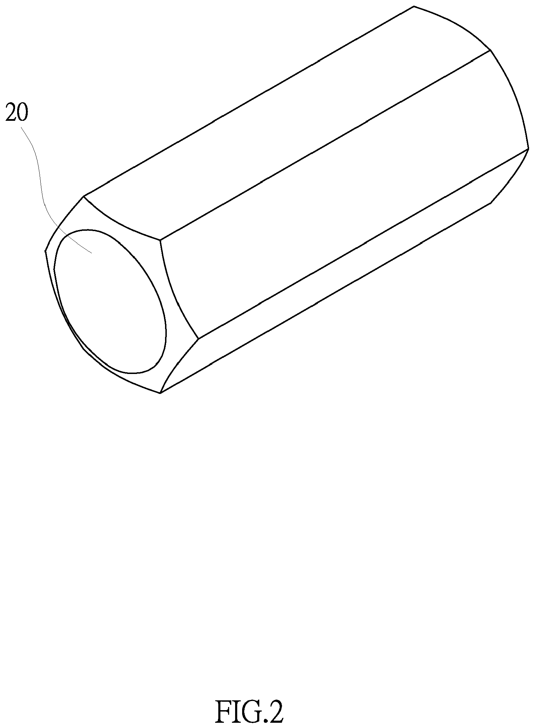

Referring to FIG. 1, there is a method for marking a tool according to a first embodiment of the present invention. Referring to FIGS. 2 to 7, a bit 20 is marked by the method shown in FIG. 1.

Referring to FIGS. 1 and 2, at 10, a bit 20 is provided. The bit 20 is made of metal by casting or forging. The bit 20 is a portion of an Allen (or "hex") key. In use, the bit 20 is inserted in a socket formed on or connected to a handle of a screwdriver or a wrench.

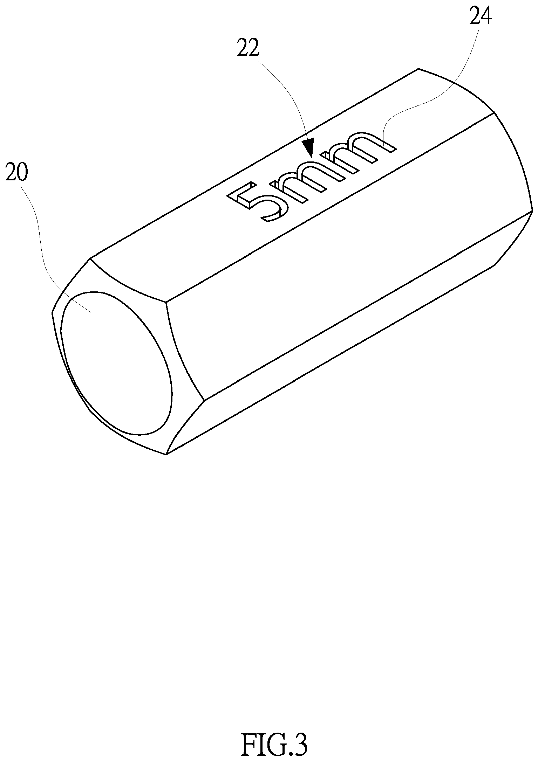

Referring to FIGS. 1 and 3, at 11, the bit 20 is made with a dented mark 22 by intaglio for example. The dented mark 22 includes several numeric digits and/or letters 24. For example, the dented mark 22 includes a numeric digit and two letters to represent the size of the bit 20.

At 12, the bit 20 is subjected to heat treatment so that the surface of the bit 20 is hardened. Thus, the bit 20 is made with adequate strength against wear and tear. Hence, the integrity of the dented mark 22 is ensured.

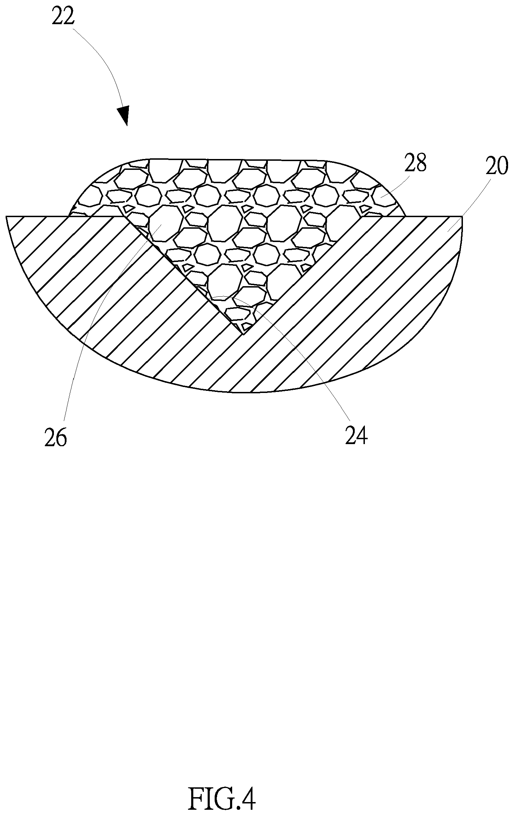

Referring to FIGS. 1 and 4, at 13, the bit 20 is subjected to coloring, i.e., the dented mark 22 is filled with colorant 26. The colorant 26 is isolating dye or paint in strong contrast to the bit 20. The colorant 26 inevitably includes a redundant portion 28 that overflows from the dented mark 22.

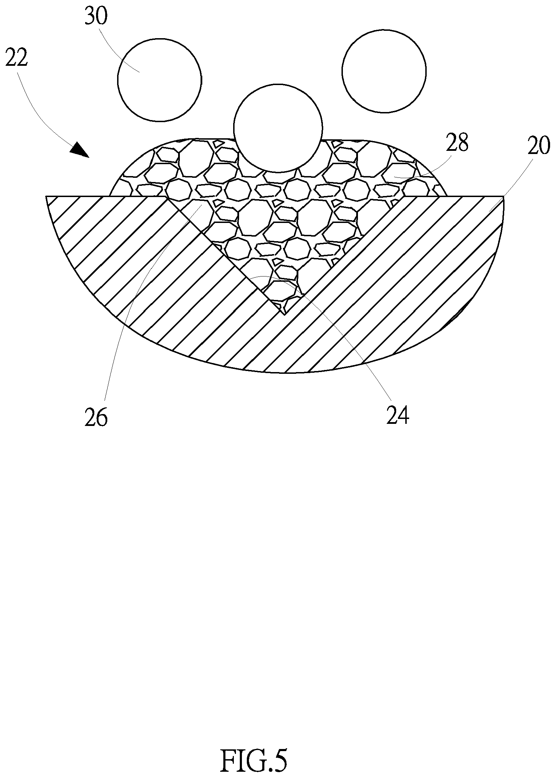

Referring to FIGS. 1 and 5, at 14, the redundant portion 28 of the colorant 26 is removed from the bit 20. The removing of the redundant portion 28 of the colorant 26 is done in a vibrator. The vibrator casts rolling elements 30 onto a portion of the bit 20 around the redundant portion 28 of the colorant 26. The rolling elements 30 hit and remove the redundant portion 28 of the colorant 26 from the bit 20. The rolling elements 30 are balls or rods.

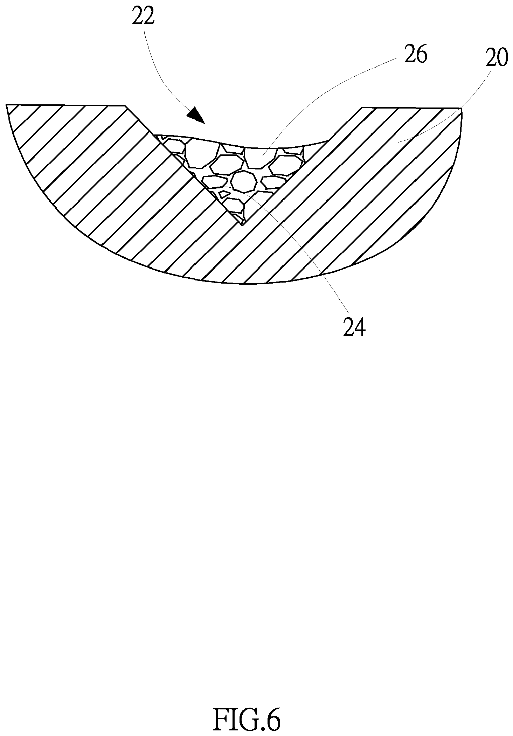

Referring to FIGS. 1 and 6, an effective portion of the colorant 26 is left in the dented mark 22 after the redundant portion 28 of the colorant 26 is removed from the bit 20. The effective portion of the colorant 26 forms a clear mark in strong contrast to the bit 20.

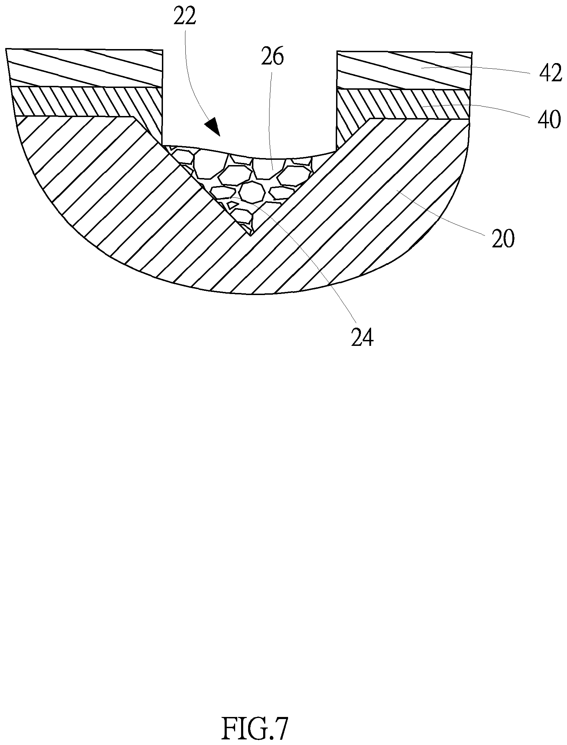

Referring to FIGS. 1 and 7, at 15, the bit 20 is subjected to multi-layered coating. At least two protection layers 40 and 42 are provided on the bit 20 except the portion covered by the colorant 26. The protection layer 40 is provided on the bit 20 so that the former protects the latter from scratching. The protection layer 42 is provided on the protection layer 40 so that the former protects the latter from scratching. The protection layer 40 is expected to remain intact when the protection layer 42 is scratched.

The colors of the protection layers 40 and 42 are in strong contrast to that of the colorant 26. The dented mark 22 is clear on the bit 20 since the color of the colorant 26 is in strong contrast to that of the protection layers 40 and 42.

The colors of the protection layers 40 and 42 are selected so that a scratch in the protection layer 42 is not obvious. Preferably, the colors of the protection layers 40 and 42 are similar or identical. Each of the protection layers 40 and 42 can be in the color of black, dark gray, dark brown, dark blue or dark green. For example, the protection layer 40 is a black film of manganese phosphate provided by bonderizing while the protection layer 42 is a black film provided by dying.

Alternatively, the protection layer 40 can be transparent while the colors of the protection layer 42 and the bit 21 are identical or similar. For example, the protection layer 40 is a transparent film of zinc phosphate provided by bonderizing while the protection layer 42 is a metallic film provided by electroplating.

Alternatively, the color of the first protection layer 40 is similar or identical to that of the bit 21. The second protection layer 42 is transparent.

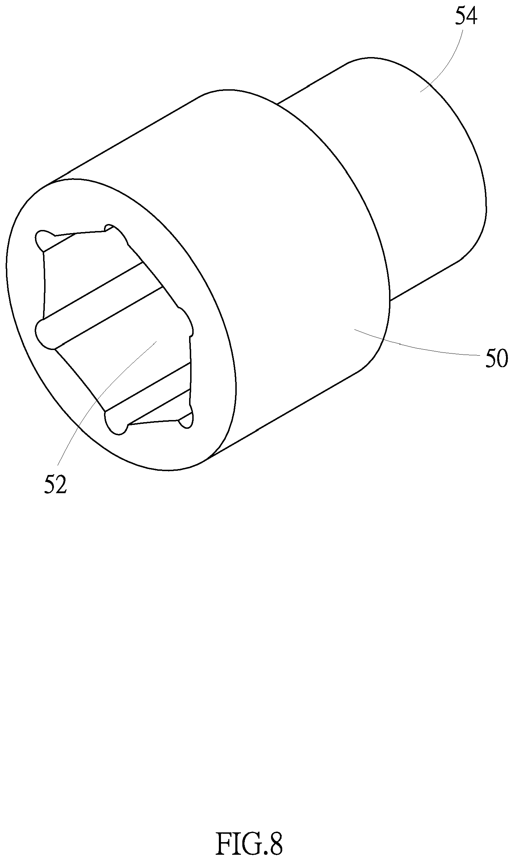

Referring to FIGS. 8 to 12, a socket 50 is marked by the method shown in FIG. 1. Referring to FIGS. 1 and 8, a socket 50 is provided. The socket 50 is made of metal by casting or forging. The socket 50 includes an end 52 formed with a hexagonal cavity for receiving a nut or a head of a bolt and another end 54 formed with a square cavity for receiving a tongue of a wrench.

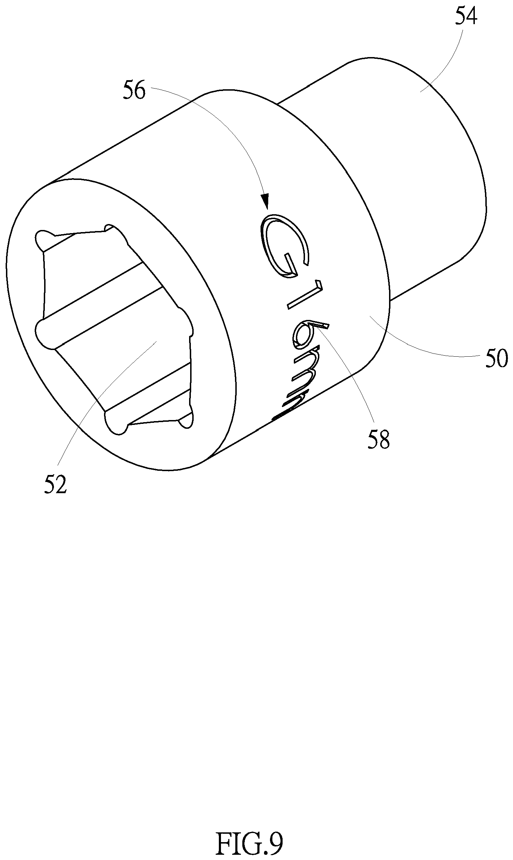

Referring to FIGS. 1 and 9, the socket 50 is provided with a dented mark 56. The dented mark 56 includes several numeric digits and/or letters 58.

Then, the socket 50 is subjected to heat treatment so that the surface of the socket 50 is hardened. Thus, the socket 50 cannot easily be worn and torn. Hence, the clarity of the dented mark 56 is ensured.

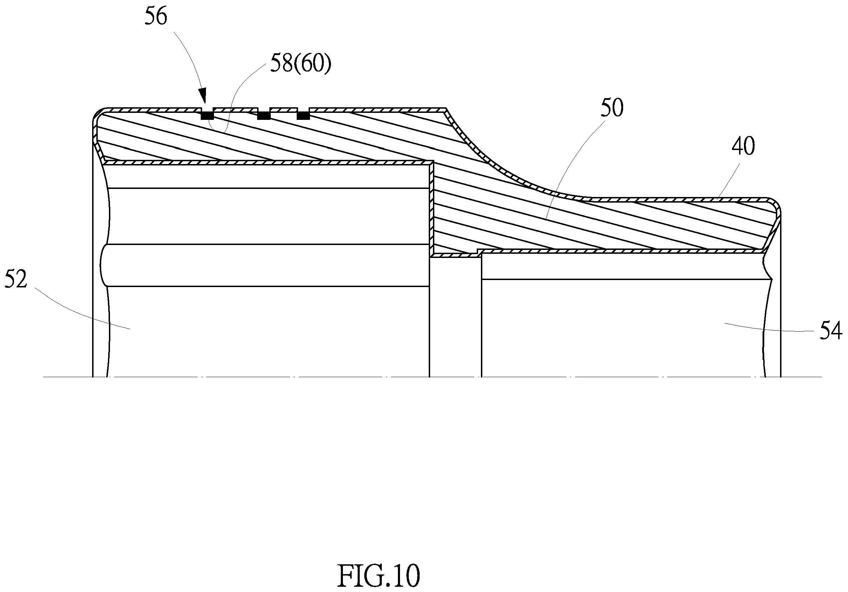

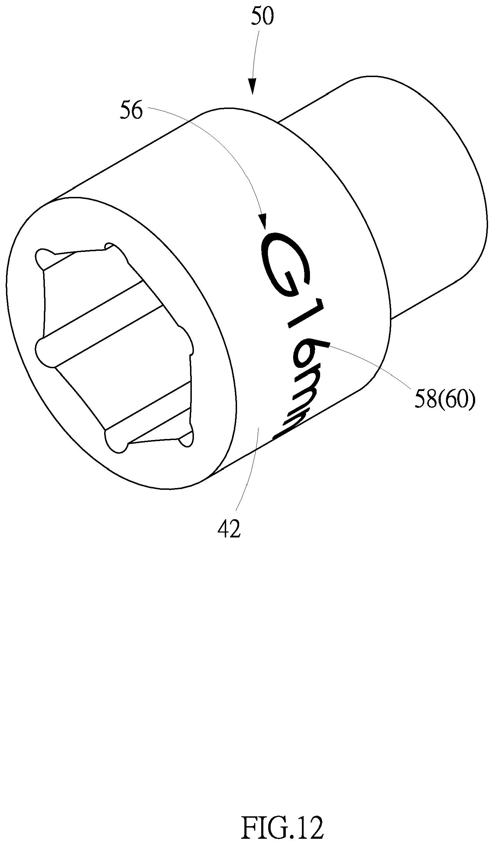

Referring to FIGS. 1 and 10, the socket 50 is subjected to coloring, i.e., the dented mark 56 is filled with colorant 60. Then, a redundant portion of the colorant 60 is removed from the socket 50. Thus, an effective portion of the colorant 60 is left in the dented mark 56. The effective portion of the colorant 60 forms a clear mark in strong contrast to the bit 20 (FIG. 12).

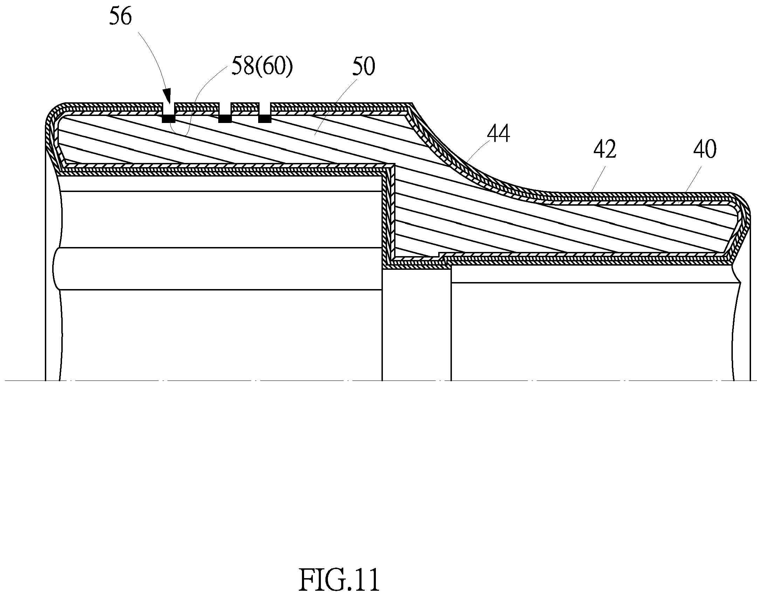

Referring to FIGS. 1 and 11, the socket 50 is subjected to multi-layered coating. Three protection layers 40, 42 and 44 are formed on the socket 50 except the portion covered by the colorant 60. The protection layer 40 is formed on the socket 50. The protection layer 42 is formed on the protection layer 40. The protection layer 44 is formed on the protection layer 42.

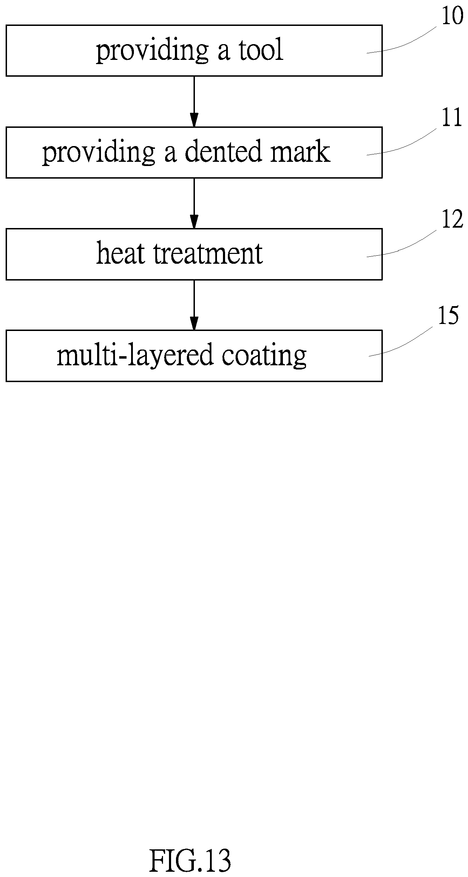

Referring to FIG. 13, there is a method for marking a tool according to a second embodiment of the present invention. The second embodiment is like the first embodiment except saving the steps of coloring and removing the redundant portion of the colorant.

The present invention has been described via the detailed illustration of the embodiments. Those skilled in the art can derive variations from the embodiments within the scope of the claims.

## Claims

1. A method for marking a tool (20, 50) including the steps of providing (11) a dented mark (22, 58) in the tool (20, 50), providing a first protection layer (40) on the tool (20, 50) except the dented mark (22, 58), and providing a second protection layer (42) on the first protection layer (40) and except the dented mark (22, 58), wherein a) the color of the first protection layer is at least similar to that of the second protection layer, or b) the first protection layer is transparent while the color of the second protection layer is at least similar to that of the tool, or c) the color of the first protection layer is at least similar to that of the tool while the second protection layer is transparent
such that when there is a scratch in the second protection layer, a color shown in the scratch is similar to the color of the second protection layer.

2. The method according to claim 1, wherein the first protection layer is a black film of manganese phosphate provided by bonderizing, wherein the protection layer is a black film provided by dying.

3. The method according to claim 1, wherein the first protection layer is a transparent film of zinc phosphate provided by bonderizing while the protection layer is a metallic film provided by electroplating.

4. The method according to claim 1, including the step (12) of subjecting the bit to heat treatment after the step (11) of providing the dented mark (22, 58) on the tool (20, 50).

5. The method according to claim 1, further including the step (13) of filling colorant (28) in the dented mark (20).

6. The method according to claim 5, wherein the colorant (28) is in strong contrast to the tool (20, 50) and the first and second protection layers (40, 42).

7. The method according to claim 5, including the step (14) of removing a redundant portion of the colorant from the tool (20, 50).

8. The method according to claim 1, including the step of providing a third protection layer (44) on the second protection layer (42).

## Patentansprüche

1. Verfahren zur Markierung eines Werkzeugs (20, 50), welches die Schritte der Bereitstellung (11) einer zurückgesetzten Markierung (22, 58) in dem Werkzeug (20, 50), der Bereitstellung einer ersten Schutzschicht (40) an dem Werkzeug (20, 50) mit Ausnahme der zurückgesetzten Markierung (22, 58) und der Bereitstellung einer zweiten Schutzschicht (42) auf der ersten Schutzschicht (40) und mit Ausnahme der zurückgesetzten Markierung (22, 58) umfasst, wobei a) die Farbe der ersten Schutzschicht zumindest ähnlich derjenigen der zweiten Schutzschicht ist, oder b) die erste Schutzschicht transparent ist, während die Farbe der zweiten Schutzschicht zumindest ähnlich derjenigen des Werkzeugs ist, oder c) die Farbe der ersten Schutzschicht zumindest ähnlich derjenigen des Werkzeugs ist, während die zweite Schutzschicht transparent ist, sodass, wenn es einen Kratzer in der zweiten Schutzschicht gibt, eine in dem Kratzer sichtbare Farbe ähnlich der Farbe der zweiten Schutzschicht ist.

2. Verfahren nach Anspruch 1, bei welchem die erste Schutzschicht ein schwarzer Film aus Manganphosphat ist, der durch Bondern ausgebildet ist, wobei die Schutzschicht ein schwarzer Film ist, der durch Färben ausgebildet ist.

3. Verfahren nach Anspruch 1, bei welchem die erste Schutzschicht ein transparenter Film aus Zinkphosphat ist, der durch Bondern ausgebildet ist, wobei die Schutzschicht ein metallischer Film ist, der durch Elektroplattierung ausgebildet ist.

4. Verfahren nach Anspruch 1, welches nach dem Schritt (11) zur Bereitstellung der zurückgesetzten Markierung (22, 58) an dem Werkzeug (20, 50) einen Schritt (12) umfasst, in dem der Werkzeugeinsatz einer Wärmebehandlung unterzogen wird.

5. Verfahren nach Anspruch 1, welches ferner einen Schritt (13) des Einfüllens eines Färbemittels (28) in die zurückgesetzte Markierung (20) umfasst.

6. Verfahren nach Anspruch 5, bei welchem das Färbemittel (28) in einem starken Kontrast mit dem Werkzeug (20, 50) und der ersten und der zweiten Schutzschicht (40, 42) steht

7. Verfahren nach Anspruch 5, welches einen Schritt (14) zum Entfernern eines überschüssigen Teils des Färbemittels von dem Werkzeug (20, 50) umfasst.

8. Verfahren nach Anspruch 1, welches einen Schritt zur Bereitstellung einer dritten Schutzschicht (44) auf der zweiten Schutzschicht (42) umfasst.

## Revendications

1. Procédé de marquage d'un outil (20, 50) comportant les étapes de fourniture (11) d'une marque bosselée (22, 58) dans l'outil (20, 50), de fourniture d'une première couche de protection (40) sur l'outil (20, 50) à l'exception de la marque bosselée (22, 58), et de fourniture d'une deuxième couche de protection (42) sur la première couche de protection (40) et à l'exception de la marque bosselée (22, 58), dans lequel a) la couleur de la première couche de protection est au moins similaire à celle de la deuxième couche de protection, ou b) la première couche de protection est transparente alors que la couleur de la deuxième couche de protection est au moins similaire à celle de l'outil, ou c) la couleur de la première couche de protection est au moins similaire à celle de l'outil alors que la deuxième couche de protection est transparente,
de sorte que, lorsqu'il y a une rayure dans la deuxième couche de protection, une couleur montrée dans la rayure soit similaire à la couleur de la deuxième couche de protection.

2. Procédé selon la revendication 1, dans lequel la première couche de protection est un film noir de phosphate de manganèse fourni par bondérisation,
dans lequel la couche de protection est un film noir fourni par teinture.

3. Procédé selon la revendication 1, dans lequel la première couche de protection est un film transparent de phosphate de zinc fourni par bondérisation alors que la couche de protection est un film métallique fourni par électroplacage.

4. Procédé selon la revendication 1, comportant l'étape (12) de soumission de l'embout à un traitement thermique après l'étape (11) de fourniture de la marque bosselée (22, 58) sur l'outil (20, 50).

5. Procédé selon la revendication 1, comportant en outre l'étape (13) de remplissage de la marque bosselée (20) à l'aide d'un colorant (28).

6. Procédé selon la revendication 5, dans lequel le colorant (28) contraste fortement avec l'outil (20, 50) et les première et deuxième couches de protection (40, 42).

7. Procédé selon la revendication 5, comportant l'étape (14) de retrait d'une portion superflue du colorant à partir de l'outil (20, 50).

8. Procédé selon la revendication 1, comportant l'étape de fourniture d'une troisième couche de protection (44) sur la deuxième couche de protection (42).
